# DEMANDE DE BREVET EUROPEEN

(11) **EP 4 843 743 A1**
(43) Date de publication de la demande: **25.11.2026**
(21) Numéro de dépôt: 26179486.1
(22) Date de dépôt: 19.05.2026
(51) Int. Cl.: B29C 48/00

(54) **PROCEDE DE PREPARATION D'UN MATERIAU COMPOSITE TEXTURE A BASE D'AU MOINS UN POLYMERE ET DE RESIDUS FIBREUX ISSUS DE LA TRANSFORMATION DE DECHETS ORGANIQUES PROVENANT DE FRUITS, DE LEGUMES ET/OU DE CEREALES**

(30) Priorité: 21.05.2025 FR 2505444
(71) Demandeur: Bihur, 64240 Ayherre (FR)
(72) Inventeur: ETCHEVERRY, Pierre, 64600 ANGLET (FR)
(74) Mandataire: Santarelli

(57) **Abrégé**

La présente invention concerne un procédé de préparation d'un matériau composite texturé, de préférence à aspect cuir, comprenant la préparation d'un extrudât, sa mise en forme et sa texturation. Elle concerne également le matériau composite texturé obtenu selon ledit procédé, son utilisation ainsi qu'un article comprenant ledit matériau composite texturé.

## Description

### DOMAINE DE L'INVENTION

La présente invention concerne le domaine des matériaux composites, et plus particulièrement un procédé de préparation d'un matériau composite texturé, notamment à aspect cuir, ainsi que le matériau composite texturé obtenu par ledit procédé ainsi que son utilisation.

### ARRIERE-PLAN TECHNOLOGIQUE

Dans un contexte où les préoccupations environnementales et éthiques occupent une place grandissante, il apparaît primordial de remplacer les matériaux traditionnels employés dans de nombreux secteurs industriels. Ainsi, le cuir véritable, d'origine animale, dont l'utilisation soulève des problématiques de bien-être animal et de durabilité, ainsi que le simili-cuir correspondant à un cuir synthétique, généralement issu de ressources fossiles et présentant un impact environnemental conséquent, requièrent le développement d'alternatives innovantes.

Il est indispensable de remplacer ces matériaux par des alternatives durables offrant des performances équivalentes avec les usages visés, tout en minimisant leur impact environnemental, afin de satisfaire une demande croissante de produits éthiques et respectueux de l'environnement.

Diverses approches ont déjà été proposées pour élaborer, notamment par extrusion, des matériaux alternatifs à partir de polymères biosourcés ou de matières végétales, en vue de fabriquer des articles tels que des films, des papiers ou encore des pièces mises en forme par thermoformage ou par injection.

À titre d'exemple, le document FR 3 094 979 décrit des granulés plastiques au moins partiellement biosourcés et au moins partiellement biodégradables, ainsi que leur procédé de préparation par extrusion. Ces granulés sont destinés à la fabrication d'objets plastiques finis tels que des films, des emballages ou des pièces obtenues par thermoformage ou moulage par injection. Plus particulièrement, ce document vise à fournir un bioplastique dans lequel le biopolymère est partiellement remplacé par une charge minérale principale, présente à plus de 50 % en poids par rapport à la masse totale des granulés, ladite charge consistant en du carbonate de calcium traité en surface. Ce document mentionne par ailleurs, de manière optionnelle, certaines charges organiques telles que l'écorce de fruit, les céréales ou le lin.

Le document TW I 869 176 s'inscrit quant à lui dans une démarche de réduction de l'usage de plastiques conventionnels, notamment pour les films de paillage, traditionnellement fabriqués à partir de polymères pétro-sourcés. Ce document expose que, malgré leurs avantages en termes de biodégradabilité et de recyclabilité, les films agricoles principalement réalisés à partir d'acide polylactique (PLA) n'ont pas encore connu d'adoption large, notamment en raison du coût élevé du PLA et de propriétés jugées insuffisantes pour certaines applications. Plus particulièrement, ce document décrit une composition biodégradable comprenant du polybutylène adipate téréphtalate (PBAT), de la poudre de fibres végétales issues de bambou et/ou de manioc, des agents de dégradation et des additifs biodégradables, parmi lesquels peuvent figurer des polymères biosourcés et d'origine bactérienne tels que les polyhydroxyalcanoates (PHA) ou le PLA, ainsi qu'un procédé d'extrusion permettant de préparer cette composition. L'objectif poursuivi est de fournir un matériau transformable, notamment destiné à des applications agricoles de type film ou feuille de paillage, apte à se dégrader directement dans le sol après usage.

Toutefois, aucun de ces documents ne s'intéresse à l'obtention d'un matériau composite texturé notamment à aspect cuir.

Les inventeurs ont notamment mis en évidence qu'il est possible d'obtenir un matériau composite texturé, de préférence à aspect cuir, à partir de résidus fibreux issus de la transformation de déchets organiques provenant de céréales, de légumes et/ou de fruits, à l'exclusion du raisin, tout en obtenant un matériau présentant des propriétés similaires, voire améliorées, par rapport à un matériau de type cuir animal ou synthétique.

La présente invention s'inscrit ainsi dans cette dynamique en proposant un matériau composite texturé, alliant esthétique, robustesse et durabilité, tout en valorisant des résidus issus de transformations agroalimentaires.

### RESUME DE L'INVENTION

La présente invention a ainsi pour objet un procédé de préparation d'un matériau composite texturé comprenant les étapes suivantes :
a. Préparation d'un extrudât :
   a1) introduction d'au moins un polymère dans un corps de mélange muni d'une bi-vis, par une zone d'alimentation principale, ledit polymère étant entraîné dans le corps de mélange au travers de la bi-vis ;
   a2) incorporation progressive, en aval de la zone d'alimentation principale, de résidus fibreux issus de la transformation de déchets organiques provenant de céréales, de légumes et/ou de fruits, à l'exclusion du raisin, au moyen d'au moins deux zones d'alimentation auxiliaires, lesdits résidus fibreux étant introduits en plusieurs fractions successives au moyen d'au moins deux zones d'alimentation auxiliaires distinctes, axialement espacées le long du corps de mélange, afin d'obtenir un mélange homogène d'au moins un polymère et desdits résidus fibreux ;
   a3) chauffage dudit mélange obtenu à l'étape a2) jusqu'à obtention d'un mélange pâteux ; et
   a4) extrusion dudit mélange pâteux obtenu à l'étape a3) au travers d'une filière pour former un extrudât ;
   dans lequel l'extrudât obtenu à l'étape a4) comprend au moins 5% en poids desdits résidus fibreux, par rapport au poids total dudit extrudât ;
b. mise en forme de l'extrudât obtenu à l'étape a4) par un procédé d'extrusion-calandrage, pour obtenir un matériau composite, et
c. texturation du matériau mis en forme à l'étape b), par embossage ou gaufrage, pour obtenir un matériau composite texturé, de préférence un matériau composite texturé à aspect cuir.

L'invention a également pour objet un matériau composite texturé obtenu ou susceptible d'être obtenu par ledit procédé.

L'invention concerne également l'utilisation dudit matériau composite texturé obtenu ou susceptible d'être obtenu selon le procédé de l'invention, en tant que revêtement pour articles de mobilier, maroquinerie ou textile.

L'invention concerne également un article comprenant, en totalité ou partiellement, un matériau composite texturé obtenu ou susceptible d'être obtenu selon le procédé de l'invention.

### DESCRIPTION DETAILLEE

Un premier objet de la présente invention concerne un procédé de préparation d'un matériau composite texturé comprenant les étapes suivantes :
a. Préparation d'un extrudât :
   a1) introduction d'au moins un polymère dans un corps de mélange muni d'une bi-vis, par une zone d'alimentation principale, ledit polymère étant entraîné dans le corps de mélange au travers de la bi-vis ;
   a2) incorporation progressive, en aval de la zone d'alimentation principale, de résidus fibreux issus de la transformation de déchets organiques provenant de céréales, de légumes et/ou de fruits, à l'exclusion du raisin, au moyen d'au moins deux zones d'alimentation auxiliaires, lesdits résidus fibreux étant introduits en plusieurs fractions successives au moyen d'au moins deux zones d'alimentation auxiliaires distinctes, axialement espacées le long du corps de mélange, afin d'obtenir un mélange homogène d'au moins un polymère et desdits résidus fibreux ;
   a3) chauffage dudit mélange obtenu à l'étape a2) jusqu'à obtention d'un mélange pâteux ; et
   a4) extrusion dudit mélange pâteux obtenu à l'étape a3) au travers d'une filière pour former un extrudât ;
   dans lequel l'extrudât obtenu à l'étape a4) comprend au moins 5% en poids desdits résidus fibreux, par rapport au poids total dudit extrudât ;
b. mise en forme de l'extrudât obtenu à l'étape a4) par un procédé d'extrusion-calandrage, pour obtenir un matériau composite, et
c. texturation du matériau mis en forme à l'étape b), par embossage ou gaufrage, pour obtenir un matériau composite texturé, de préférence un matériau composite texturé à aspect cuir.

L'étape a) de préparation de l'extrudât du procédé selon l'invention est réalisée au moyen d'une extrudeuse, notamment une extrudeuse bi-vis qui comprend un corps de mélange contenant une double vis co-rotative ou contrarotative.

Par « corps de mélange », on entend un cylindre creux constituant le corps principal de l'extrudeuse, dans lequel s'effectuent l'acheminement, le chauffage, le cisaillement et le mélange des matériaux. Le corps de mélange comprend en son sein un système de vis de transport, plus particulièrement une double-vis (également nommée bi-vis)

Par « bi-vis », on entend un dispositif composé de deux vis co-rotatives ou contrarotatives logées à l'intérieur du corps de mélange, qui assurent l'avancement des matériaux, leur homogénéisation par cisaillement, et leur transport jusqu'à la filière. La bi-vis permet un malaxage plus efficace que les vis simples, en particulier pour les mélanges complexes ou chargés.

Par « zone d'alimentation principale », on entend une trémie ou une ouverture positionnée en amont du corps de mélange, par laquelle est introduit le polymère. Cette zone est généralement située dans la première portion du corps de mélange, et peut être régulée en température pour initier le début de la fusion du polymère. Cette zone d'alimentation principale est à une température relativement basse comprise entre 20°C et 60°C.

Par le terme « entraîné dans le corps de mélange au travers de la bi-vis », on entend que le polymère, une fois introduit dans la zone d'alimentation principale, est pris en charge mécaniquement par les filets des vis et progresse longitudinalement dans le corps de mélange en direction de la filière afin d'initier l'extrusion.

Par « polymère », on entend toute matière polymérique thermoplastique, de nature pétro-sourcée, biosourcée et/ou d'origine bactérienne, susceptible d'être fondue, mélangée et extrudée.

Avantageusement, le polymère est choisi parmi un polymère pétro-sourcé, de préférence recyclé, biosourcé et/ou d'origine bactérienne.

Plus particulièrement, le polymère pétro-sourcé peut notamment être choisi parmi le polyuréthane thermoplastique (TPU), polyéthylène (PE) : HDPE (acronyme anglais pour désigner High-Density Polyethylene soit polyéthylène haute densité en français), LDPE (acronyme anglais pour désigner Low-Density Polyethylene, polyéthylène basse densité en français, LLDPE (acronyme anglais pour désigner Linear Low-Density Polyethylene, polyéthylène basse densité linéaire en français), le polypropylène (PP), le polyéthylène téréphtalate (PET), le polycarbonate (PC), l'acrylonitrile-butadiène-styrène (ABS), polychlorure de vinyle (PVC pour Polyvinyl chloride en anglais), ou leurs mélanges.

Le polymère biosourcé peut notamment être choisi parmi l'acide polylactique (PLA), les amidons thermoplastiques (TPS), les copolymères PLA-PHB (polyhydroxybutyrate), le bio-polyéthylène (Bio-PE), le bio-polypropylène (bio-PP), des polymères dérivés de la canne à sucre, des polymères dérivés du bambou, polyuréthane thermoplastique (TPU) végétal, ou leurs mélanges.

Le polymère d'origine bactérienne peut notamment être choisi parmi le polyhydroxyalcanoates (PHA), dont le polyhydroxybutyrate (PHB), le polyhydroxybutyrate-co-valerate (PHBV), le polyhydroxybutyrate-co-hexanoate (PHBH), ou leurs mélanges.

Avantageusement, le polymère est recyclé.

De préférence, le polymère est choisi parmi le polyuréthane, l'acide polylactique, le polyhydroxyalcanoate, le polypropylène, le polyéthylène, l'amidon thermoplastique, des polymères dérivés de la canne à sucre, des polymères dérivés du bambou, ou leurs mélanges.

Le polymère est introduit sous forme de granulés, pellets ou poudre, typiquement d'une dimension comprise entre 1 mm et 5 mm, de préférence d'une dimension comprise entre 2 mm et 4 mm.

On notera que dans le cadre de la présente demande, et sauf stipulation contraire, les gammes de valeurs indiquées s'entendent bornes incluses.

Avantageusement, une étape de pré-traitement du polymère est réalisée. Cette étape consiste notamment à sécher le polymère pour obtenir un taux d'humidité inférieur à 10% avant l'étape a1), le pourcentage étant exprimé par rapport au poids total du polymère après séchage.

Les méthodes de détermination du taux d'humidité sont bien connues de l'homme du métier. De préférence, le taux d'humidité mentionné dans la présente invention est déterminé par mesure gravimétrique, conformément à la norme ISO 15512.

Dans toute la demande, lorsqu'aucune date n'est précisée pour un règlement, une norme ou une directive, il s'agit du règlement, de la norme ou de la directive en vigueur à la date de dépôt.

Une fois le polymère introduit dans la zone d'alimentation principale conformément à l'étape a1), une étape a2) est réalisée afin d'incorporer progressivement, en aval de la zone d'alimentation principale, des résidus fibreux issus de la transformation de déchets organiques, de céréales, de légumes et/ou de fruits, à l'exclusion du raisin, au moyen d'au moins deux zones d'alimentation auxiliaires, afin d'obtenir un mélange homogène d'au moins un polymère et desdits résidus.

Selon la présente invention, les résidus fibreux sont obtenus après traitement thermique et mécanique de déchets organiques. Ces résidus sont principalement issus de déchets de matières organiques végétales (tiges, feuilles, écorces, pulpe, marc, cosse etc.).

Par « résidus fibreux », on entend des résidus composés majoritairement de fibres végétales (cellulose, hémicellulose et lignine) qui se caractérisent par une structure fibreuse, c'est-à-dire formée d'éléments allongés de type filamenteux ou fibrillaire, présentant un rapport longueur/diamètre élevé.

Dans la présente demande, les expressions « résidus issus de la transformation de déchets organiques », « résidus issus de déchets organiques », « résidus fibreux » et le terme « résidus » sont utilisés de manière équivalente et interchangeable.

De préférence, les déchets organiques peuvent provenir de déchets issus de l'industrie agroalimentaire, tels que les drêches issues du brassage de la bière, ou encore la pulpe ou le marc de fruits et/ou de légumes.

Avantageusement, la drêche utilisée est issue du brassage de la bière, constituée majoritairement de résidus de céréales tels que l'orge, l'orge maltée, le blé ou d'autres grains brassicoles, et correspond à un coproduit de l'industrie brassicole obtenu après extraction du moût.

De préférence, les résidus issus de la transformation de déchets organiques sont choisis parmi la drêche de céréales, tels que l'orge, le blé, le maïs, l'avoine, le seigle, le soja, le lin, ou leurs mélanges.

De préférence, le fruit est choisi parmi la pomme, la prune, la banane, la poire, la fraise, la mangue, l'ananas, le kiwi, la figue, la goyave, la papaye, la grenade, l'abricot, le melon, la pastèque, la cerise, les agrumes tels que l'orange, le pamplemousse, le citron, ou leurs mélanges. De manière préférée, le fruit est la pomme.

Les raisins sont exclus de la présente invention.

De préférence, les légumes sont choisis parmi la tomate, la carotte, la betterave, la pomme de terre, la courgette, le concombre, le poivron, le choux, l'épinard, la courge, le potiron, les pois, les fèves, le brocoli, le chou-fleur, le radis, le navet, le poireau, le céleri, l'aubergine, ou leurs mélanges.

Avantageusement, les résidus comprennent au moins 10%, de préférence entre 10% et 90%, plus préférentiellement entre 15% et 70% en poids de fibres, le pourcentage en poids étant indiqué sur le poids sec des résidus.

Les méthodes de détermination de la teneur en fibres sont bien connues de l'homme du métier. A titre d'exemple et de manière préférée, la détermination de cette teneur sera effectuée selon la méthode AOAC 985.29.

Les résidus peuvent être introduits sous forme de poudre, de granulés ou de pellets, de dimension inférieure ou égale à 3 mm, de préférence de dimension comprise entre 0,1 mm et 2 mm, encore plus préférentiellement entre 0,2 mm et 1,5 mm.

Avantageusement, les résidus comprennent entre 0,1% et 30% en poids, encore plus préférentiellement entre 1% et 18% en poids de sucre, les pourcentages étant indiqués sur le poids sec des résidus fibreux.

Avantageusement, les résidus fibreux présentant un taux de sucre supérieur à 30% en poids de sucre, le pourcentage étant indiqué sur le poids sec des résidus, sont exclus de la présente invention.

Les méthodes de détermination de la teneur en sucres sont bien connues de l'homme du métier. A titre d'exemple et de manière préférée, la détermination de cette teneur sera effectuée selon la méthode de la norme ISO 22184 :2021, ou par une méthode enzymatique spécifique telle que décrite dans AOAC 977.20.

Avantageusement, les résidus subissent, avant l'étape a2), une étape de prétraitement comprenant une étape de séchage à une température appropriée visant à abaisser leur teneur en humidité en dessous de 10%, le pourcentage étant exprimé par rapport au poids total des résidus après séchage et/ou une étape de broyage, de micronisation, et/ou tamisage, permettant d'obtenir une poudre dont la dimension est inférieure ou égale à 3 mm.

Une humidité excessive peut perturber l'extrusion, altérer l'homogénéité du mélange, provoquer des irrégularités de mise en forme et nuire à l'aspect final du matériau composite. Le séchage préalable du polymère et/ou des résidus permet ainsi de stabiliser le procédé et de favoriser l'obtention d'un matériau composite présentant des propriétés mécaniques et esthétiques plus régulières.

Lorsque les résidus présentent une teneur élevée en fibres (par exemple plus de 30% en poids, ce pourcentage étant basé sur le poids sec des résidus), ceux-ci doivent être broyés jusqu'à l'obtention d'une poudre dont la granulométrie est inférieure à 300 µm. Une telle granulométrie permet en effet d'éviter une présence notable de fibres visibles dans le matériau composite final, laquelle serait préjudiciable notamment à l'aspect esthétique du produit fini.

Par « zones d'alimentation auxiliaires », on entend des zones d'introduction complémentaires, situées en aval de la zone d'alimentation principale, permettant l'incorporation différée et progressive des résidus organiques. Ces zones peuvent être situées à différents points le long du corps de mélange.

Avantageusement, l'incorporation progressive des résidus fibreux est réalisée au moyen d'au moins deux zones d'alimentation auxiliaires, et de manière préférentielle, au moyen de trois zones d'alimentation auxiliaires distinctes. Le nombre de ces zones peut être ajusté en fonction de la quantité de résidus fibreux à introduire dans l'extrudeuse.

Plus cette quantité est élevée, par exemple lorsque plus de 30% en poids de résidus est incorporé, plus il est avantageux de répartir l'introduction des résidus sur plusieurs zones d'alimentation auxiliaires, afin de garantir une incorporation progressive et d'assurer un mélange homogène du polymère et des résidus fibreux avant l'étape d'extrusion.

Par « incorporation progressive », on entend que les résidus sont ajoutés en plusieurs fractions, successivement dans les différentes zones auxiliaires, de façon à éviter les surcharges locales dans l'extrudeuse, les agrégats et favoriser une dispersion homogène dans la matrice polymère.

Par « mélange homogène », on entend un mélange dans lequel les résidus sont répartis de façon uniforme au sein du polymère fondu, sans agrégation apparente ni phase continue distincte.

L'obtention d'un mélange homogène avant le passage en filière constitue une étape importante du procédé selon l'invention. En effet, l'incorporation progressive des résidus issus de déchets organiques dans le polymère, réalisée en plusieurs points le long du corps de mélange, permet d'assurer une dispersion fine et uniforme de ces résidus dans la matrice polymère fondue. Cette homogénéisation est favorisée par l'action du bi-vis, qui assure à la fois le transport, le cisaillement et le mélange intensif du matériau.

Cette homogénéité du mélange, obtenue avant extrusion à travers la filière, est essentielle et conditionne directement la qualité du matériau composite obtenu à partir de cet extrudât, en assurant une répartition régulière des charges organiques à l'échelle microscopique. Elle permet notamment d'éviter des défauts d'aspect (tels que points noirs, marbrures ou zones de surconcentration de résidus) et des variations locales des propriétés mécaniques dans le matériau composite final.

Il en résulte un extrudât de qualité constante, apte à la préparation d'un matériau composite texturé, de préférence un matériau composite à aspect cuir. Cette maîtrise du mélange permet donc de répondre à des exigences industrielles élevées tout en conservant les avantages environnementaux liés à l'utilisation de composants issus de ressources renouvelables ou de coproduits organiques et non de matière première animale ou issues de ressources fossiles.

Une fois l'étape a2) réalisée, le mélange (d'au moins un polymère et de résidus fibreux issus de déchets organiques) est chauffé jusqu'à l'obtention d'un mélange pâteux (étape a3)).

Par « mélange pâteux », on entend un mélange présentant une consistance intermédiaire entre l'état liquide et l'état solide, se caractérisant par une viscosité élevée, une déformabilité sous contrainte, et une cohésion suffisante pour maintenir une forme sans écoulement spontané.

Dans le cadre de la présente invention, le mélange pâteux résulte du chauffage progressif d'au moins un polymère et de résidus fibreux issus de déchets organiques, jusqu'à obtention d'un état homogène et malléable, apte à être extrudé au travers d'une filière. Plus particulièrement, ce mélange, bien que non fluide au repos, est capable de s'écouler sous l'effet de la contrainte mécanique exercée par la bi-vis et de traverser une filière afin de former un extrudât continu. Il présente une viscosité adaptée au passage en filière, sans rupture de flux ni séparation de phases, garantissant une qualité optimale de l'extrudât obtenu.

Avantageusement, le procédé selon la présente invention comprend entre l'introduction du polymère à l'étape a) et l'extrusion à l'étape d), une montée progressive en température qui est appliquée le long du corps de mélange, de manière à chauffer progressivement le mélange, la température augmentant d'une valeur T₁, comprise entre 20°C et 60°C, jusqu'à une valeur T₂, comprise entre 160°C et 250°C.

Plus particulièrement, au cours du procédé, cette montée progressive en température est appliquée le long du corps de mélange, au moyen de zones de chauffe contrôlées, de manière à assurer la fusion du polymère et la dispersion homogène des résidus dans la matrice fondue. La température de traitement est ajustée en fonction de la nature du polymère, et est généralement comprise entre 120°C et 250°C. L'ajustement de la température à appliquer au cours du procédé selon l'invention relève des connaissances générales de l'homme du métier.

Une fois l'état pâteux du mélange obtenu à l'issue de l'étape a3), une étape a4) est mise en œuvre, consistant en l'extrusion dudit mélange pâteux au travers d'une filière pour former un extrudât. A ce stade, un extrudât continu est obtenu.

Au cours de l'étape a4), le mélange pâteux est poussé, par exemple, à travers une filière qui peut être sous forme de plaque perforée ou d'orifice calibré, située à l'extrémité du corps de mélange, afin de former un brin ou un profil continu.

La filière permet de conférer au matériau extrudé une forme prédéfinie (telle qu'un jonc ou un brin).

L'extrudât obtenu est le matériau obtenu en sortie de filière, sous forme continue (brin, jonc, filament, profil) ou découpée (granulés, pellets), pouvant être utilisé tel quel ou soumis à des étapes ultérieures telles que le refroidissement, le séchage, la granulation ou la transformation (mise en forme de film ou feuille).

Avantageusement, le polymère est introduit à l'étape a1) et les résidus fibreux sont incorporés à l'étape a2) en des quantités respectives telles que l'extrudât obtenu à l'étape a4) comprend entre 30% et 95% en poids, de préférence entre 40% et 95% en poids, encore plus préférentiellement entre 45% et 90% en poids dudit au moins un polymère, et entre 5% et 70% en poids, de préférence entre 5% et 60% en poids, encore plus préférentiellement entre 10% et 55% en poids desdits résidus fibreux, par rapport au poids total dudit extrudât.

L'incorporation progressive des résidus fibreux présente un avantage particulier en ce qu'elle permet d'obtenir un mélange homogène avec le polymère dans lequel les fibres sont dispersées de manière homogène et entremêlées à la matrice polymère au cours de la phase de mélange (étapes a1 et a2)).

Cette homogénéité structurelle favorise la cohésion du matériau et permet ainsi la préparation d'un matériau composite texturé, notamment à aspect cuir, présentant de bonnes propriétés mécaniques (souplesse ou encore résistance à la traction) ainsi qu'une surface texturée proche du cuir véritable (animal) ou simili-cuir (cuir synthétique), permettant son utilisation notamment en revêtement souple, maroquinerie, ou textile.

Avantageusement, à l'étape a1) et/ou à l'étape a2) peut également être ajouté au moins un additif choisi parmi un colorant et/ou un additif fonctionnel (par exemple antio-odeur, anti-fongique et anti-microbien), sélectionné(s) en fonction des propriétés recherchées pour le matériau composite texturé, notamment à aspect cuir final.

Avantageusement, entre 0,1% et 20%, de préférence entre 0,5% et 15%, plus préférentiellement entre 1% et 10% en poids d'additifs sont ajoutés, les pourcentages en poids étant indiqués sur le poids total du matériau composite texturé obtenu.

Les quantités des différents composés constituant l'extrudât obtenu à l'étape a4) correspondent aux quantités introduites dans la zone d'alimentation principale et dans les zones d'alimentation auxiliaires, respectivement au cours des étapes a1) et a2).

Avantageusement, l'extrudât est biosourcé, de préférence l'extrudât est biosourcé à 100%, c'est-à-dire qu'il comprend au moins un polymère biosourcé et/ou d'origine bactérienne et des résidus issus de déchets organiques. La présente invention propose ainsi une alternative durable, recyclable et biodégradable aux matériaux traditionnellement utilisés dans les domaines des revêtements, du textile ou de la maroquinerie, en particulier d'origine animale ou synthétique, tout en valorisant des déchets organiques selon une logique d'économie circulaire.

Avantageusement, le procédé selon l'invention comprend en en outre une étape a5), correspondant à une extrusion-granulation, dans laquelle l'extrudât obtenu à l'étape a4) est refroidi dans un réservoir de refroidissement comprenant de l'eau, puis est découpé par un couteau granulateur afin d'obtenir un extrudât sous forme de granulés, de poudres ou de pellets.

Selon une forme de réalisation, le refroidissement et la découpe peuvent être réalisés de manière successive, l'extrudât étant tout d'abord refroidi dans un réservoir de refroidissement contenant de l'eau, puis tiré sous forme de brins (ou joncs), séché, et enfin coupé à l'aide d'un dispositif à lames rotatives, correspondant à une granulation à sec.

Selon une autre forme de réalisation, le refroidissement et la découpe sont réalisés simultanément, par exemple au sein d'un module fermé à eau pressurisée, de type granulation sous eau, dans lequel l'extrudât fondu est extrudé directement au travers de la filière et immédiatement découpé sous l'eau par un couteau rotatif, au ras de la plaque de sortie.

Le choix du système de granulation dépend notamment de la viscosité du mélange fondu, du débit d'extrusion, ainsi que de la forme et de la taille souhaitées pour les particules finales.

Avantageusement, après l'étape a5), une étape de séchage est mise en œuvre sur les granulés, poudres ou pellets obtenus, à une température appropriée, pour obtenir un taux d'humidité inférieur à 10% en poids, de préférence entre 1% et 8% en poids, encore plus préférentiellement entre 2% et 5% en poids, les pourcentages étant exprimés par rapport au poids total des granulés, de la poudre ou des pellets séchés.

De préférence, les granulés sont séchés pendant environ 2 heures, à environ 60°C.

L'étape a) de préparation d'un extrudât est considérée comme une étape de compoundage (mélange mis sous forme de granulés, de poudre ou de pellets), au moyen d'une extrudeuse, notamment une extrudeuse bi-vis.

Puis, après cette étape a) de préparation d'un extrudât, une étape b) de mise en forme dudit extrudât obtenu à l'étape a) est réalisée pour obtenir un matériau composite.

Selon la présente invention, la mise en forme de l'extrudât, notamment sous forme de film ou de feuille, est réalisée par calandrage, plus particulièrement une étape d'extrusion à filière plate est mise en œuvre, d'un calandrage.

Selon un mode de réalisation préféré de l'invention, l'étape b) de mise en forme consiste à faire fondre les granulés (également nommés compound) dans une extrudeuse, puis à mettre en forme le matériau fondu au moyen d'une filière plate, suivie de son passage entre des rouleaux calandres, de manière à obtenir un film ou une feuille de matériau composite.

Selon un mode de réalisation préféré de l'invention, les étapes a) et b) peuvent être mises en œuvre de manière séquentielle en deux étapes distinctes. Dans un premier temps, un compoundage est réalisé (étape a)), au moyen d'une extrudeuse bi-vis, afin d'assurer le mélange homogène d'au moins un polymère avec des résidus issus de la transformation de déchets organiques. L'extrudât obtenu est ensuite éventuellement refroidi, solidifié puis granulé, de manière à former des granulés (ou compound) pouvant être stocké ou transporté. Dans un second temps, ce compound est introduit dans une extrudeuse, par exemple de type mono-vis, où il est fondu puis mis en forme au moyen d'une filière plate, suivie d'un calandrage entre des rouleaux pour obtenir un film ou une feuille de matériau composite. Cette configuration présente l'avantage de séparer la phase de compoundage de la phase de mise en forme, permettant une meilleure maîtrise des paramètres de mise en forme en fonction de l'application finale visée.

Selon un mode de réalisation préféré de l'invention, l'étape a) de préparation de l'extrudât et l'étape b) de mise en forme de l'extrudât sont réalisées de manière séquentielle et continue au sein d'un même dispositif.

Par « même dispositif », on entend une même ligne de production dans laquelle l'étape a) de préparation d'un extrudât est directement suivie de l'étape b) de mise en forme de l'extrudât.

De préférence, le dispositif comprend une extrudeuse bi-vis (pour la préparation de l'extrudât) suivie d'une extrusion à filière plate et d'un calandrage (pour la mise en forme).

Les résidus fibreux incorporés progressivement au cours de l'étape a2) comprennent moins de 30% en poids, de préférence entre 0,1% et 25% en poids, encore plus préférentiellement entre 1% et 18% en poids de sucre, les pourcentages étant indiqués sur le poids sec des résidus.

La sélection de résidus présentant une teneur limitée en sucres contribue à la bonne mise en œuvre du procédé. Un taux de sucre plus élevé peut en effet compliquer l'étape de mélange d'au moins un polymère et des résidus issus des déchets organiques, car lors du chauffage, le sucre peut subir une réaction de Maillard, provoquant une caramélisation qui accentue la viscosité et l'adhérence aux parois de la vis de l'extrudeuse (étape a)) et des calandres (étape b)), et de dégrader l'aspect de surface du matériau composite obtenu. À l'inverse, l'utilisation de résidus dont la teneur en sucres est maîtrisée permet de stabiliser le procédé, de limiter les défauts visuels et d'améliorer la régularité du matériau composite final.

À l'issue de l'étape b), une étape c) de texturation est mise en œuvre sur le matériau composite ainsi mis en forme.

L'étape c) de texturation est réalisée par embossage ou gaufrage.

Cette étape a pour objet de modifier l'aspect de surface du matériau composite, notamment par application d'une texture, d'un relief ou d'un motif, afin d'obtenir un matériau composite texturé, de préférence un matériau composite texturé à aspect cuir, qui réponde également à des exigences esthétiques et/ou fonctionnelles.

Ainsi, le procédé selon la présente invention permet d'obtenir un matériau composite texturé, de préférence un matériau composite texturé à aspect cuir à partir d'au moins un polymère et de résidus issus de la transformation de déchets organiques.

Un autre objet de la présente invention concerne ainsi un matériau composite texturé, de préférence un matériau composite texturé à aspect cuir, obtenu ou susceptible d'être obtenu par un procédé selon la présente invention tel que décrit ci-dessus.

Par « matériau composite texturé », on entend un matériau composite, de préférence sous forme de film ou de feuille, comprenant au moins un polymère et des résidus fibreux issus de la transformation de déchets organiques, et présentant sur au moins une de ses surfaces un motif en relief obtenu par embossage ou gaufrage.

Par « matériau composite texturé à aspect cuir », « matériau composite à aspect cuir » ou « imitant le cuir », on entend un matériau obtenu à partir d'un mélange comprenant au moins un polymère et des résidus issus de la transformation de déchets organiques, mis en forme sous la forme d'un film ou d'une feuille, et présentant des propriétés mécaniques et un aspect visuel et/ou tactile similaires à ceux du cuir véritable ou synthétique.

Cet aspect cuir résulte de la souplesse du matériau composite obtenu selon le procédé de l'invention, de sa résistance mécanique, ainsi que d'un traitement de surface, notamment par texturation (gaufrage ou embossage), conférant une texture grainée, nervurée ou satinée, comparable à celle du cuir.

Le matériau composite texturé, notamment à aspect cuir obtenu selon l'invention constitue ainsi une alternative biosourcée, sans structure multicouches, au cuir animal ou synthétique, tout en étant compatible avec les procédés de transformation classiques des matériaux thermoplastiques.

Le matériau composite texturé selon l'invention se présente de préférence sous forme d'un film ou d'une feuille ayant une épaisseur comprise entre 0,2 mm et 3 mm, de préférence entre 0,4 mm et 2 mm.

Selon un mode de réalisation préféré, le matériau composite à aspect cuir obtenu selon l'invention est un matériau monolithique, notamment sous forme d'un film ou d'une feuille monocouche, dépourvu de support textile. Un tel matériau peut présenter des propriétés mécaniques satisfaisantes sans nécessiter de structure renforcée multicouche, tout en conservant un aspect de surface compatible avec les usages visés.

Avantageusement, le matériau composite texturé selon l'invention comprend entre 5% et 70% en poids, de préférence entre 5% et 60% en poids, encore plus préférentiellement entre 10% et 55% en poids de résidus fibreux, les pourcentages étant indiqués sur le poids total du matériau composite texturé.

Avantageusement, le matériau composite texturé comprend entre 30% et 95% en poids, de préférence entre 40% et 95% en poids, encore plus préférentiellement entre 45% et 90% en poids de polymère, les pourcentages étant indiqué sur le poids total du matériau composite texturé.

Avantageusement, le matériau composite texturé selon l'invention comprend entre 0,1% et 20% en poids, de préférence entre 0,5% et 15%, plus préférentiellement entre 1% et 10% en poids d'additifs, les pourcentages étant indiqués sur le poids total du matériau composite texturé

Le matériau composite texturé à aspect cuir selon l'invention présente des propriétés mécaniques comparables à celles du cuir naturel et synthétique, tout en offrant une texture similaire à celle du cuir. Il s'inscrit dans une démarche de valorisation circulaire et constitue une alternative éthique, contribuant à la réduction, voire à l'élimination, des matières premières d'origine fossile.

Un autre objet de la présente invention concerne l'utilisation d'un matériau composite texturé obtenu ou susceptible d'être obtenu selon l'invention, en tant que revêtement pour articles de mobilier, maroquinerie ou textile.

Par « revêtement pour articles de mobilier, maroquinerie ou textile », on entend un matériau composite texturé destiné à recouvrir tout ou partie d'un support rigide ou souple, afin d'en modifier l'aspect, la texture ou les propriétés mécaniques et esthétiques.

Il peut s'agir notamment de revêtements utilisés pour des meubles (chaises, canapés, panneaux décoratifs), des articles de maroquinerie (sacs, portefeuilles, ceintures, accessoires) ou des éléments textiles techniques ou grand public (vêtements, doublures, chaussures, bagagerie, etc.).

Un autre objet de la présente invention concerne un article comprenant, en totalité ou partiellement, un matériau composite texturé obtenu ou susceptible d'être obtenu selon l'invention.

A titre non limitatif, les articles sont des objets rigides ou souples, destinés à des applications dans les domaines de la maroquinerie, du mobilier, du bâtiment, du textile, de l'automobile, du jouet, ou de l'outillage.

Par « article comprenant, en totalité ou partiellement, un matériau composite texturé », on entend tout objet manufacturé ou transformé dans lequel le matériau composite texturé selon l'invention constitue soit la totalité de l'article (100%), soit une partie fonctionnelle ou décorative de celui-ci.

L'intégration du matériau composite texturé dans de tels articles permet de remplacer partiellement ou totalement des matériaux conventionnels notamment d'origine fossile, tout en assurant des performances mécaniques et esthétiques compatibles avec les contraintes d'usage, et en répondant à une logique de valorisation de résidus organiques et de durabilité environnementale.

### BRÈVE DESCRIPTION DE LA FIGURE

D'autres caractéristiques et avantages de l'invention apparaîtront dans les exemples qui suivent, donnés à titre illustratif, avec référence à :

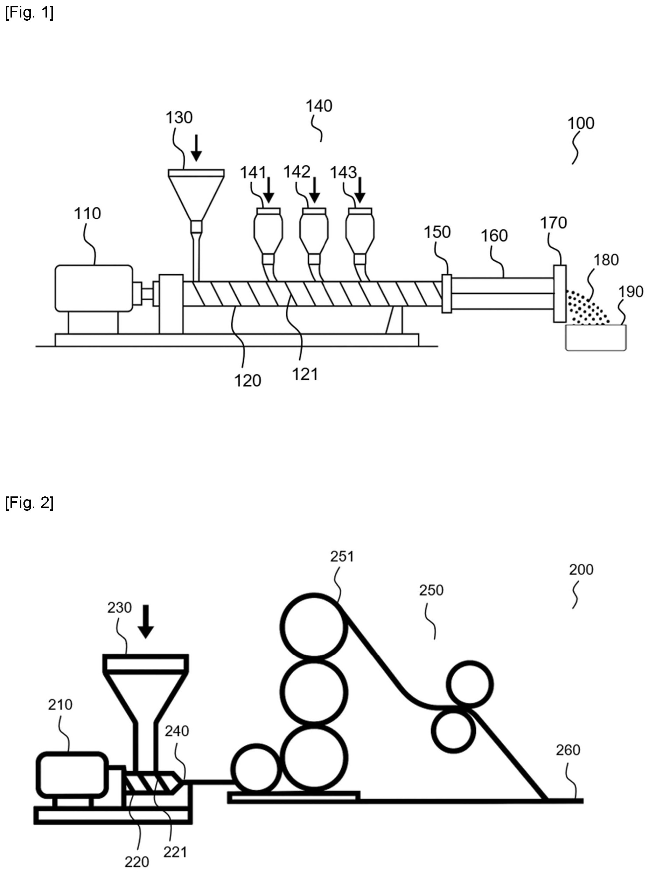

La Figure 1 représente schématiquement un dispositif d'extrusion-granulation bi-vis (100) permettant la mise en oeuvre du procédé de préparation d'un extrudât selon l'invention. Le dispositif comprend un moteur (110) qui entraîne un corps de mélange (120), lequel renferme un ensemble bi-vis (121) assurant l'acheminement et le cisaillement des matériaux introduits. À l'amont du corps de mélange (120), une zone d'alimentation principale (130) est prévue pour l'introduction (le chargement) d'au moins un polymère ; le polymère ainsi introduit est immédiatement pris en charge par le bi-vis (121) et progresse le long du corps de mélange (120).

En aval de la zone (130), une zone d'alimentations auxiliaires (140) comprend successivement, par exemple, trois trémies (141, 142, 143) permettant d'incorporer progressivement des résidus issus de déchets organiques (notamment issus de fruits, de légumes et/ou de céréales) dans le polymère préchauffé. Les résidus sont intimement mélangés au sein du corps de mélange (120) sous l'action de la géométrie coopérante de la bi-vis (121). Un chauffage progressif est réalisé le long du corps de mélange (120) afin d'obtenir un mélange (polymère et résidus) pâteux.

À l'extrémité aval du corps de mélange, une filière (150) reçoit le mélange pâteux ; la pression développée par la bi-vis (121) force l'écoulement du mélange à travers les orifices calibrés de la filière (150), formant ainsi des brins continus d'extrudât. Ces brins sont immédiatement immergés dans un réservoir de refroidissement (160) rempli d'eau, où le contact thermique réduit rapidement la température (jusqu'à atteindre une température proche de 25°C) et solidifie le matériau extrudé.

À la sortie du réservoir (160), un couteau granulateur (170) sectionne les brins refroidis pour obtenir des particules régulières, telles que des granulés, de la poudre ou des pellets (180). Enfin, un bac de stockage (190) collecte les extrudâts (ou compound) obtenus (180) pour le conditionnement ou le transport ultérieur. Ainsi, la figure illustre l'enchaînement fonctionnel depuis l'alimentation des composants jusqu'à la récupération du produit granulé final.

La figure 2 illustre un procédé d'extrusion à filière plate suivie d'un calandrage (200) pour préparer un matériau composite selon l'invention (260), à partir de granulés (180).

Le dispositif (200) comprend deux zones distinctes et connectées : une zone d'extrusion (mono-vis) à filière plate à gauche et une zone de calandrage (250) à droite.

L'unité d'extrusion comprend un moteur (210) qui entraîne une vis (221) logée dans un corps de mélange (220). Les granulés (compound) (180) selon l'invention sont introduits dans ce corps de mélange (220) par l'intermédiaire d'une trémie d'alimentation (230). Sous l'effet combiné du chauffage et du cisaillement mécanique induit par la rotation de la vis (221), les granulés fondent et forment une matière fondue homogène.

Cette matière fondue est ensuite extrudée à travers une filière plate (240), à la sortie de laquelle elle prend la forme d'une bande continue, dont l'épaisseur est déterminée précisément par la géométrie de la filière, choisie en fonction de l'utilisation souhaitée du matériau composite final.

Cette bande est ensuite directement transférée vers l'unité de calandrage (250). L'unité de calandrage comprend notamment un ensemble de rouleaux (251) disposés verticalement. Ces rouleaux assurent simultanément la calibration, l'aplanissement, et le refroidissement progressif de la bande extrudée. Le matériau composite selon l'invention (260) ainsi obtenu est sous forme d'une feuille ou d'un film continu. Ils permettent ainsi de conférer au matériau composite obtenu selon l'invention (260) ses caractéristiques dimensionnelles et ses propriétés de surface finales.

### EXEMPLES

Les matières premières utilisées dans les exemples sont listées ci-après :
- Polymère végétal : polyuréthane thermoplastique végétal (TPU, acronyme anglais pour « Thermoplastic Polyurethane ») : Elastollan^{®} 1010.
- Marc de pomme (comprenant moins de 25% de sucre).

### Exemple 1 : procédé de préparation d'un matériau composite texturé à aspect cuir selon l'invention

Cet exemple illustre le procédé de préparation d'un matériau composite texturé à aspect cuir selon la présente invention.

Tout d'abord, l'extrudât a été préparé selon le protocole suivant :

### Étape 1 : Prétraitement du marc de pomme

Séchage : Le marc de pomme est d'abord déshydraté (60°C) afin de réduire sa teneur en humidité jusqu'à obtenir un taux d'humidité inférieur à 10%.

Broyage : Le marc de pomme est ensuite broyé pour obtenir une poudre, nommée poudre de résidus (de pomme), d'une dimension inférieure ou égale à 3 mm.

### Étape 2 : Prétraitement du polymère thermoplastique

L'Elastollan^{®} 1010, sous forme de granulés, est préalablement déshydraté pour obtenir un taux d'humidité inférieur à 10%.

### Étape 3 : Alimentation et mise en œuvre dans l'extrudeuse bi-vis

Pour la préparation de l'extrudât une extrudeuse bi-vis de type co-rotative pour garantir une bonne homogénéité, a été utilisée.

Les granulés de polymère (TPU) sont introduits dans un corps de mélange (120) muni d'une bi-vis (121), par une zone d'alimentation principale (130), lesdits granulés de TPU sont entrainés dans le corps de mélange (120) de l'extrudeuse au travers de la bi-vis (121). Cette zone d'alimentation principale (130) est à une température relativement basse comprise entre 20°C et 60°C.

Le dispositif bi-vis (121) correspond à un mélangeur interne (vis sans fin) afin d'assurer une dispersion uniforme des poudres de résidus (de pomme) dans le TPU.

La poudre de résidus (de pomme) est ensuite ajoutée de manière progressive au polymère (TPU) dans des zones d'alimentation auxiliaires (141, 142, 143), qui sont des zones d'alimentation distinctes, disposées en aval de la zone d'alimentation principale (130). L'incorporation progressive par les zones d'alimentation auxiliaires (141, 142, 143) de la poudre de résidus dans le TPU est nécessaire pour garantir une dispersion homogène du polymère et des résidus.,

Le taux d'incorporation est contrôlé pour atteindre 50% en poids de marc de pomme (sous forme de poudre de résidus) par rapport au poids total de l'extrudât.

Tout le long du corps de mélange (120), c'est-à-dire de la zone d'alimentation principale (130) jusqu'à la filière (150), la température augmente progressivement jusqu'à atteindre la température de fusion du TPU qui est comprise entre 120°C et 180°C, afin d'obtenir un mélange pâteux. La température maximale atteinte ne doit pas être trop élevée pour ne pas dégrader les propriétés du polymère.

La vitesse de rotation des vis est réglée, à 300 tours/minutes.

### Étape 4 : Mise en forme

Le mélange homogène est conduit vers une filière (150), qui lui donne la forme d'un jonc.

Ce jonc, immédiatement après son extrusion, est refroidi rapidement dans un réservoir de refroidissement (160) comprenant de l'eau froide jusqu'à atteindre une température voisine de la température ambiante, typiquement de l'ordre de 25°C.

Une fois solidifié, le jonc est découpé en morceaux par un couteau granulateur (170) pour obtenir un extrudât sous forme de granulés (180) de dimension comprise entre 0,1 mm et 4 mm. L'extrudât obtenu sous forme de granulés (est également désigné par le terme « compound ».

Le compound ainsi obtenu est ensuite séché pendant 2 heures à 60°C.

Le compound obtenu présente une bonne homogénéité visuelle, une forme régulière, et est apte à être transformé.

### Etape 5 : incorporation des granulés obtenus ci-avant dans une extrudeuse mono-vis

Dans cette étape, le procédé utilisé est une extrusion-calandrage. Plus particulièrement, une extrusion à filière plate associée à une chaîne de calandrage (200).

Les granulés (180) sont introduits dans une trémie d'alimentation (230) d'une extrudeuse mono-vis.

Les granulés sont ensuite transportés à travers une vis sans fin (221) à travers un corps de mélange (220) chauffé. La combinaison de la chaleur et de la pression fait fondre les granulés, qui sont ensuite poussés à travers une filière film (240).

La vitesse de rotation de la vis est de 100 tours/minutes.

L'ouverture de la filière film est fixée à 2,1 mm et une étape de calandrage (250) est immédiatement effectuée à la sortie du film, avec des rouleaux (251) réglés à 10°C pour assurer le refroidissement. Cette opération permet de mettre en forme (ici sous forme de film) le matériau composite extrudé. Puis afin de reproduire le relief souhaité, une étape d'embossage est réalisée.

Le matériau composite texturé à aspect cuir obtenu comprend 50% en poids de marc de pomme et 50% en poids de polymère (Elastollan^{®} 1010), les pourcentages étant indiqués sur le poids total du matériau composite.

Un essai en traction a ensuite été réalisé afin de mesurer la résistance à la traction du matériau composite texturé à aspect cuir fabriqué dans cet exemple, c'est-à-dire sa capacité à résister à une force de traction appliquée dans le sens de son axe longitudinal.

Cet essai se déroule selon les étapes suivantes :
Préparation de l'éprouvette : Une éprouvette (échantillon) injectée de forme normalisée est placée sous atmosphère contrôlée (Humidité=60% à 25°C).

Installation de l'échantillon : L'échantillon est placé dans une machine d'essai universelle monté pour les essais de traction. Les mâchoires de serrage de la machine tiennent fermement l'échantillon aux extrémités opposées. Les mors ont un écartement de 5,5 cm.

Application de la charge : La machine d'essai commence à écarter les mors à une vitesse constante de 1 mm/minute induisant une force mécanique.

Rupture de l'échantillon : l'échantillon atteint un point de rupture où il se rompt. La force maximale appliquée avant la rupture est enregistrée comme résistance à la traction.

### Résultats de l'essai en traction :

Le Tableau 1 ci-dessous illustre les résultats de cet essai en traction en comparaison avec un matériau composite traditionnel pour une même largeur et longueur :

### [Table 1]

**Tableau 1 : Résultats de l'essai en traction du matériau composite obtenu à l'exemple 1 et d'un matériau composite traditionnel**

| | **Matériau composite traditionnel*** | **Matériau composite selon l'invention** |
|---|---|---|
| Résistance mécanique (en Newton) | 66 | 62 |

| | | |
|---|---|---|
| ** Matériau composite traditionnel comprenant notamment une couche textile et une couche enduite consistant en un polymère et de la drêche de pomme.* | | |

Les résultats de l'essai en traction démontrent que le matériau composite obtenu selon l'invention, avec une résistance de 62 N, a une résistance mécanique comparable à un matériau composite traditionnel affichant 66 N. II convient de noter que ce matériau traditionnel bénéficie d'une structure renforcée par superposition de couches, comprenant notamment une couche textile apportant un supplément de robustesse mécanique. Ces résultats démontrent ainsi que le procédé selon l'invention permet d'obtenir, sans recourir à une telle structure multicouche renforcée, un matériau composite texturé à aspect cuir ayant une robustesse équivalente, voire supérieure.

## Revendications

1. Procédé de préparation d'un matériau composite texturé comprenant les étapes suivantes :
a. Préparation d'un extrudât :
a1) introduction d'au moins un polymère dans un corps de mélange (120) muni d'une bi-vis (121), par une zone d'alimentation principale (130), ledit polymère étant entraîné dans le corps de mélange (120) au travers de la bi-vis (121) ;
a2) incorporation progressive, en aval de la zone d'alimentation principale (130), de résidus fibreux issus de la transformation de déchets organiques provenant de céréales, de légumes et/ou de fruits, à l'exclusion du raisin, au moyen d'au moins deux zones d'alimentation auxiliaires (141, 142, 143), lesdits résidus fibreux étant introduits en plusieurs fractions successives au moyen d'au moins deux zones d'alimentation auxiliaires distinctes, axialement espacées le long du corps de mélange, afin d'obtenir un mélange homogène d'au moins un polymère et desdits résidus fibreux ;
a3) chauffage dudit mélange obtenu à l'étape a2) jusqu'à obtention d'un mélange pâteux ; et
a4) extrusion dudit mélange pâteux obtenu à l'étape a3) au travers d'une filière (150) pour former un extrudât ;
dans lequel l'extrudât obtenu à l'étape a4) comprend au moins 5% en poids desdits résidus fibreux, par rapport au poids total dudit extrudât ;
b. mise en forme de l'extrudât obtenu à l'étape a4) par un procédé d'extrusion-calandrage (200), pour obtenir un matériau composite (260), et
c. texturation du matériau mis en forme à l'étape b), par embossage ou gaufrage, pour obtenir un matériau composite texturé, de préférence un matériau composite texturé à aspect cuir.

2. Procédé selon la revendication 1, dans lequel le polymère est choisi parmi un polymère petro-sourcé, biosourcé et/ou d'origine bactérienne.

3. Procédé selon la revendication 1 ou 2, dans lequel le polymère est choisi parmi le polyuréthane, l'acide polylactique, le polyhydroxyalcanoate, le polypropylène, le polyéthylène, l'amidon thermoplastique, des polymères dérivés de la canne à sucre, des polymères dérivés du bambou, ou leurs mélanges.

4. Procédé selon l'une quelconque des revendications 1 à 3, dans lequel les résidus fibreux comprennent au moins 10% en poids de fibres, le pourcentage en poids étant indiqué sur le poids sec des résidus fibreux.

5. Procédé selon l'une quelconque des revendications 1 à 4, dans lequel les résidus fibreux sont choisis parmi la drêche de céréales, le marc et/ou la pulpe de légumes et/ou de fruits, à l'exclusion du raisin.

6. Procédé selon la revendication 5, dans lequel les fruits sont choisis parmi la pomme, la prune, la banane, la poire, la fraise, la mangue, l'ananas, le kiwi, la figue, la goyave, la papaye, la grenade, l'abricot, le melon, la pastèque, la cerise, les agrumes tels que l'orange, le pamplemousse, le citron, ou leurs mélanges.

7. Procédé selon l'une quelconque des revendications 1 à 6, dans lequel l'extrudât obtenu à l'étape a4) comprend entre 5% et 70% en poids de résidus fibreux, par rapport au poids total dudit extrudât.

8. Procédé selon l'une quelconque des revendications 1 à 7, dans lequel les résidus fibreux subissent avant l'étape a2) un prétraitement comprenant un séchage jusqu'à obtenir une teneur en humidité inférieure à 10% en poids.

9. Procédé selon l'une quelconque des revendications 1 à 8, dans lequel les résidus fibreux subissent avant l'étape a2) un prétraitement comprenant une étape de broyage, micronisation et/ou tamisage afin d'obtenir des résidus fibreux présentant une dimension inférieure ou égale à 3 mm.

10. Procédé selon l'une quelconque des revendications 1 à 9, dans lequel l'étape (a) de préparation de l'extrudât et l'étape (b) de mise en forme dudit extrudât sont réalisées de manière séquentielle et continue au sein d'un même dispositif, de préférence une extrudeuse bi-vis suivie d'une extrusion à filière plate et d'un calandrage.

11. Matériau composite texturé obtenu par un procédé selon l'une quelconque des revendications 1 à 10.

12. Matériau composite texturé selon la revendication 11 comprenant entre 5% et 70% en poids de résidus fibreux, le pourcentage étant indiqué sur le poids total du matériau composite texturé.

13. Utilisation d'un matériau composite texturé obtenu selon l'une quelconque des revendications 1 à 10 ou du matériau composite texturé selon la revendication 11 ou 12, en tant que revêtement pour articles de mobilier, maroquinerie ou textile.

14. Article comprenant, en totalité ou partiellement, un matériau composite texturé obtenu selon l'une quelconque des revendications 1 à 10 ou du matériau composite texturé selon la revendication 11 ou 12.
